# EUROPÄISCHE PATENTANMELDUNG

(11) **EP 4 215 306 A1**
(43) Veröffentlichungstag der Anmeldung: **26.07.2023**
(21) Anmeldenummer: 23153184.9
(22) Anmeldetag: 25.01.2023
(51) Int. Cl.: B23C 5/28, B23B 51/06, B23C 5/20

(54) **KÜHLKANÄLE HYBRIDWERKZEUG**

(30) Priorität: 25.01.2022 DE 102022101646
(71) Anmelder: KSB SE & Co. KGaA, 67227 Frankenthal (DE)
(72) Erfinder: NOBEL, Tammuz, 67227 Frankenthal (DE)

(57) **Zusammenfassung**

Die Erfindung betrifft ein rotierendes, zerspanendes Werkzeug (1) mit einer konventionell gefertigten Aufnahme (2) und einem generativ gefertigten Hauptkörper (3). Der Hauptkörper (3) weist mindestens eine Schneidebene (4) mit mindestens einer Schneidplatte (5) und mindestens einem Kühlmittelkanal (6) auf. Der Kühlmittelkanal (6) weist eine generativ gefertigte, röhrenförmige Struktur auf.

## Beschreibung

Die Erfindung betrifft ein rotierendes, zerspanendes Werkzeug mit einer konventionell gefertigten Aufnahme und einem generativ gefertigten Hauptkörper, wobei der Hauptkörper mindestens eine Schneidebene mit mindestens einer Schneidplatte und mindestens einem Kühlmittelkanal aufweist.

Zerspanendes Werkzeug ist der Sammelbegriff für eine Gruppe von Werkzeugen, die Werkstücken eine bestimmte geometrische Form geben. Dabei wird von den Werkstücken überschüssiges Material auf mechanischem Weg in Form von Spänen abgehoben. Beim Zerspanen dringt die Schneide des Zerspanungswerkzeugs in das Werkstück ein und trägt die Späne ab.

Fräsmaschinen sind zerspanende Werkzeugmaschinen, die mittels rotierender Schneidwerkzeuge Material von einem Werkstück zerspanend abtragen, um es in die gewünschte Form zu bringen. Beim Fräsen stehen mindestens drei verschiedene Vorschubrichtungen zur Verfügung, um die Fertigung komplexer Körper zur erreichen.

Drehmaschinen sind Werkzeugmaschinen, die rotationssymmetrische Werkstücke herstellen unter Rotation entweder des Werkstücks oder des Werkzeugs.

Ein zerspanendes Werkzeug umfasst eine Aufnahme und einen Hauptkörper. Die Aufnahme ist so gestaltet, dass eine sichere Verbindung des Werkzeugs mit der Werkzeugmaschine und gegebenenfalls ein schneller Werkzeugwechsel realisiert werden können. Der Hauptkörper weist mindestens eine Schneidebene auf, an der eine Schneidplatte befestigt ist. Schneidplatten besitzen mindestens eine Schneidkante. Der Schneidstoff, aus dem sie gefertigt sind, wird je nach Material des zu zerspanenden Werkstücks gewählt. Verbreitet sind Schnellarbeitsstahl, Hartmetall, Keramik oder polykristallines kubisches Bornitrid.

Im Wesentlichen unterscheidet man zwischen Vollfräswerkzeugen und Trägerwerkzeugen für Wendeschneidplatten. Trägerwerkzeuge sind meist aus mittelfesten unvergüteten Stählen hergestellte Aufnahmen für Wendeschneidplatten. Die Schneidplatten aus Hartmetall, Keramik oder Diamant sind entweder einzeln angeschraubt oder geklemmt und können je nach Geometrie der Schneidplatte mehrmals wiederverwendet werden. Bei Trägerwerkzeugen mit internem Kühlsystem versorgen Kühlmittelbohrungen die Schneidplatte mit Kühlflüssigkeit.

Die Aufnahme des Werkzeugs wird in der Regel konventionell über Urformen und/oder Umformen gefertigt. Hierbei wird entweder durch Abtragung oder Veränderung des Ausgangsmaterials die gewünschte Form erreicht. Dazu zählen Methoden wie Gießen, Pressen, Drehen oder Fräsen. Da die Form und Struktur der Aufnahme keine so hohe Komplexität aufweist, bietet sich hier die günstige und bewährte konventionelle Fertigung des Werkstücks an.

Die generative Fertigung erlaubt die Fertigung von Werkzeugen und Bauteilen mit einem deutlich höheren Komplexitätsgrad. Mit Hilfe von IT-basierten Werkzeugmaschinen werden aus einem oder mehreren flüssigen oder festen Werkstoffen schichtweise dreidimensionale Gegenstände erzeugt. Dabei finden verschiedene physikalische oder chemische Härtungs- oder Schmelzprozesse statt. Dieses Verfahren findet gerade auch im Werkzeugbau immer weitere Verbreitung und erlaubt ein zunehmend anspruchsvolleres Design. Zur Bearbeitung von Metall werden in der generativen Fertigung bevorzugt das Laserstrahlschmelzen, das Elektronenstrahlschmelzen und das Lasersintern eingesetzt. In der EP 1 864 748 B1 wird ein Verfahren zur Herstellung eines Zerspanwerkzeuges, dessen Werkzeuggrundkörper generativ gefertigt ist, beschrieben. Als besondere Vorteile des generativen Fertigungsprozesses sind vor allem folgende Vorteile anzumerken: Uneingeschränkte geometrische Formgebung des Hauptkörpers, reduzierter Konstruktionsaufwand, Verkürzung der Herstellungszeit, leichtere Fertigung kleinerer Stückzahlen.

Durch den mechanischen Vorgang der Zerspanung wird auch thermische Energie freigesetzt. Um das Werkzeug und das zu bearbeitende Werkstück vor Überhitzung zu schützen oder bestimmte temperaturabhängige Eigenschaften zu erhalten oder zu erzielen, wird die entstehende Wärme abgeführt. Dies geschieht bei Zerspanungswerkzeugen bevorzugt mittels durch einen Kühlmittelkanal geleiteten Flüssigkeiten, die auf die Schneidkante aufgebracht werden.

Die Kühlmittelkanäle des zerspanenden Werkzeugs werden bei der konventionellen Fertigung in der Regel gebohrt, was die Position beziehungsweise den Verlauf dieser Kanäle limitiert.

Die Kühlung der Schneidflächen ist nicht zuverlässig in allen Fällen optimal, da die Position der Kühlkanäle bei der herkömmlichen Fertigung nur in Form einer geraden Bohrung ausgeführt und somit fertigungsbedingt verlaufen.

Die Auslassöffnungen der Kühlmittelkanäle werden bisher stets als runde Bohrung ausgeführt, was keine individuell angepasste Ausrichtung der Öffnung zur Schneidfläche erlaubt.

In der DE 10 2018 122 215 A1 wird ein System zum Kühlen eines Schneidwerkzeugs beschrieben. Das Kühlmittel wird dabei durch eine zentrale Bohrung der Werkzeugaufnahme dem Schneidwerkzeug zugeführt. Über im Schneidwerkzeug integrierte Kühlkanäle wird das Kühlmittel an die zu kühlenden Stellen des Schneidwerkzeugs transportiert.

Aufgabe der Erfindung ist es, ein rotierendes, zerspanendes Werkzeug anzugeben, das eine optimale Kühlung des Werkzeugs und des zu bearbeitenden Werkstücks gewährleisten kann. Dabei soll das Werkzeug individuell an die Zerspanungsaufgabe angepasst werden können. Darüber hinaus soll das Werkzeug schnell als auch günstig hergestellt werden können und sich möglichst langlebig als auch zuverlässig im Einsatz bewähren.

Diese Aufgabe wird erfindungsgemäß durch ein rotierendes, zerspanendes Werkzeug gelöst. Bevorzugte Varianten sind den nebengeordneten Hauptansprüchen, den Unteransprüchen, der Beschreibung und den Zeichnungen zu entnehmen.

Erfindungsgemäß weist der generativ gefertigte Kühlmittelkanal eine röhrenförmige Struktur mit Windungen auf.

Die röhrenförmige Struktur ist vorzugsweise als ein längerer zylindrischer Hohlkörper zum Transport von Flüssigkeiten oder Gasen ausgebildet. Die Form der Röhre ist komplex ausgeführt und weist weder scharfe Kanten noch starre Abwinklungen auf, die typischerweise bei Bohrungen unvermeidbar sind.

Die Windungen der röhrenförmigen Struktur weisen vorzugsweise die Kontur eines Bogens bzw. eines leicht geschwungenen Bogens auf. Diese Windungen begünstigen eine ablösungsfreie und verwirbelnde Strömungsführung des Kühlmittels.

Bei einer vorteilhaften Variante der Erfindung weisen die Windungen der röhrenförmigen Struktur einen unregelmäßigen gekrümmten Verlaufs eines Bogens auf, der beispielsweise den Verlauf einer sanften Biegung, einer harmonischen Krümmung und/oder flach gewölbten Kurve beschreibt.

Der Kühlmittelkanal weist vorzugsweise innerhalb des Hauptkörpers mindestens eine Eintrittsöffnung und mindestens eine Austrittsöffnung auf, wobei er die Eintrittsöffnung mit der Austrittsöffnung direkt verbindet.

Der Verlauf des Kühlmittelkanals im Hauptkörper orientiert sich nach dem Prinzip der Strukturbionik an biologischen Vorbildern. So soll erreicht werden, dass der Kühlmittelkanal im Inneren des Hauptkörpers parallel zu dessen Außenfläche geführt wird, um die Stabilität des Werkzeugs zu erhöhen.

Bei einer besonders bevorzugten Variante erfolgt eine Verzweigung des Kühlmittelkanals möglichst direkt nach Eintritt in den Hauptkörper und entfernt sich radial vom Zentrum. Danach setzt sich der Kühlmittelkanal axial parallel zur Außenfläche bis zur Austrittsöffnung fort.

Jeder Schneidebene ist idealerweise mindestens ein Kühlmittelkanal zugeordnet, so dass die Schneidplatte und das zu bearbeitende Werkstück ausreichend gekühlt und vor der durch den Zerspanungsvorgang freiwerdenden thermischen Energie geschützt werden. Die Wärme wird durch das sie aufnehmende Kühlmittel abgeleitet. Dies gelingt umso effizienter je genauer das Kühlmittel in passender Dosierung verdüst wird.

Jeder Kühlmittelkanal verläuft vorzugsweise außerhalb der Werkzeugmitte, nachdem er sich nach dem Eintritt in den Hauptkörper des Werkzeugs verzweigt hat. Die Stabilität des Hauptkörpers kann besser gewährleistet werden, da die Mittelbohrung entfällt und die Kühlmittelkanäle strukturbionisch außerhalb des Zentrums verlaufen.

Der Begriff strukturbionisch beschreibt charakteristische Strukturen nach dem Vorbild der Natur. Unter diesem Gesichtspunkt können die Kühlmittelkanäle eine aderförmige Struktur aufweisen. Das bedeutet, dass die Kühlmittelkanäle vorzugweise keinen Kreisquerschnitt aufweisen, strömungsoptimierte Windungen beschreiben, eine Anordnung im stabilsten Werkzeugsegment vollziehen und sich in Richtung der Austrittsöffnungen verzweigen.

Auf dem Weg zu den Austrittsöffnungen weist jeder Kühlmittelkanal bevorzugt mindestens zwei Abzweigkühlmittelkanäle auf. So wird ein optimaler Zufluss des Kühlmittels zu den Austrittsöffnungen gewährleistet. Die Querschnitte der Kühlmittelkanäle sowie der Abzweigkühlmittelkanäle sind idealerweise so angepasst, dass der geeignete Verdüsungseffekt an den Austrittsöffnungen erzielt werden kann. Hierdurch kann sicher gewährleistet werden, dass das Werkstück und das Werkzeug ausreichend mit kühlendem Schmiermittel versorgt werden.

Bei einer günstigen Variante der Erfindung befindet sich am Ende jedes Kühlmittelkanals mindestens eine Austrittsöffnung, die auf mindestens eine Schneidplatte ausgerichtet ist. Der Abstand und die Ausrichtung der Austrittsöffnungen werden so gewählt, dass das Kühlmittel zielgerichtet auf die gesamte Schneidplatte auftrifft, um dauerhaft eine optimale Schneidwirkung erzielen zu können.

Die Austrittsöffnung weist bevorzugt eine ovale Form auf. Diese kann sowohl eine symmetrische als auch unsymmetrische Form aufweisen. Grundsätzlich wird die Form der Austrittsöffnung so gewählt, dass das Kühlmittel optimal auf die Schneidplatte verdüst wird.

Bei einer besonders günstigen Variante der Erfindung weist die Austrittsöffnung eine elliptische Form auf.

Idealerweise ist die Austrittsöffnung nicht rund ausgeführt, wie es bei bekannten Kühlmittelkanälen der Fall ist, die durch eine Bohrung in den Hauptkörper des Werkstücks eingebracht wurden.

Die generative Fertigung erlaubt eine Adaption der Austrittsöffnung zur gezielten Erzeugung eines Kühlmittelstrahls, der hinsichtlich seiner breite und seiner Reichweite an die Form der Schneidplatte optimiert ist. Auf diese vorteilhafte Weise wird eine stets ausreichende Schmierung und Kühlung gewährleistet, wodurch das zerspanende Werkzeuge besonders zuverlässig als auch langlebig eingesetzt werden kann.

Die Form der Austrittsöffnung orientiert sich idealerweise immer an der Lage und Konstruktion der Schneidplatte. Form und Zahl der Austrittsöffnungen bedingen die konkrete Ausgestaltung der Austrittsöffnung. Sie stehen in einer Wirkverbindung zur optimalen Kühlung während des Zerspanungsprozesses.

Die Anordnung und die Form der Schneidplatte bedingen vorzugsweise die Form der Austrittsöffnung, die stets so gewählt wird, dass das Kühlmittel in idealer Dosierung und Geschwindigkeit auftrifft.

Bei der generativen Fertigung ist es zudem möglich, den Hauptkörper mit einer integrierten Gitterstruktur zu fertigen. Da weniger Material zur Herstellung verwendet werden muss, ermöglicht dies eine Gewichtsreduktion bei gleichzeitig hoher Stabilität des Werkzeugs.

Die röhrenförmige Struktur mit Windungen des Kühlmittelkanals, insbesondere die strukturbionische Ausführung des Kühlmittelkanals, wird bei der generativen Fertigung durch selektives Einwirken einer Strahlung auf ein Aufbaumaterial erzeugt. Bei der additiven Fertigung wird Schicht um Schicht aufgetragen und geschmolzen, wobei der Kühlmittelkanal gezielt ausgespart wird. Dies ermöglicht eine präzise Umsetzung des durch die Konstruktion vorgegebenen Verlaufs der Kühlkanäle.

Ein additiv gefertigter Hauptkörper ist mit einem additiven Fertigungsverfahren erzeugt worden. Die Bezeichnung additive Fertigungsverfahren umfasst alle Fertigungsverfahren, bei denen Material Schicht für Schicht aufgetragen und somit Kühlmittelkanäle, Abzweigkühlmittelkanäle und Austrittsöffnungen erzeugt werden. Dabei erfolgt der schichtweise Aufbau computergesteuert aus einem oder mehreren flüssigen oder festen Werkstoffen nach vorgegebenen Maßen und Formen. Beim Aufbau finden physikalische oder chemische Härtungs- oder Schmelzprozesse statt. Typische Werkstoffe für das 3D-Drucken sind Kunststoffe, Kunstharze, Keramiken, Metalle, Carbon- und Graphitmaterialien.

Für die Ausbildung des Hauptkörpers werden insbesondere das selektive Laserschmelzen und das Cladding, auch bekannt als Auftragsschweißen, angewandt.

Beim selektiven Laserschmelzen wird ein Hauptkörper eines zerspanenden Werkzeugs nach einem Verfahren hergestellt, bei dem zunächst eine Schicht eines Aufbaumaterials auf der Aufnahme aufgebracht wird. Vorzugsweise handelt es sich bei dem Aufbaumaterial zur Herstellung des Hauptkörpers um metallische Pulverteilchen. Bei einer Variante der Erfindung werden dazu eisenhaltige und/oder kobalthaltige Pulverpartikel eingesetzt. Diese können Zusätze wie Chrom, Molybdän oder Nickel enthalten. Der metallische Aufbauwerkstoff wird in Pulverform in einer dünnen Schicht auf eine Platte aufgebracht. Dann wird der pulverförmige Werkstoff mittels einer Strahlung an den jeweils gewünschten Stellen lokal vollständig aufgeschmolzen und es bildet sich nach der Erstarrung eine feste Materialschicht. Anschließend wird die Aufnahme um den Betrag einer Schichtdicke abgesenkt und es wird erneut Pulver aufgetragen. Dieser Zyklus wird so lange wiederholt, bis alle Schichten hergestellt sind und der fertige Strömungsraum bzw. der fertige Hauptkörper entstanden ist.

Als Strahlung kann beispielsweise ein Laserstrahl zum Einsatz kommen, welcher den Hauptkörper aus den einzelnen Pulverschichten generiert. Die Daten zur Führung des Laserstrahls werden auf der Grundlage eines 3D-CAD-Körpers mittels einer Software erzeugt. Alternativ zu einem selektiven Laserschmelzen kann auch ein Elektronenstrahl (EBN) zum Einsatz kommen.

Beim Auftragsschweißen oder Cladding wird der Hauptkörper nach einem Verfahren hergestellt, das ein Anfangsstück durch Schweißen beschichtet. Das Auftragsschweißen baut dabei durch einen Schweißzusatzwerkstoff in Form von einem Draht oder einem Pulver ein Volumen auf, das eine besonders filigrane und optimierte Form des Hauptkörpers mit strukturbionisch verlaufenden Kühlmittelkanälen realisiert.

Bei einer besonders vorteilhaften Variante der Erfindung werden der Hauptkörper, die Kühlmittelkanäle und Austrittsöffnungen aus einem Aufbaumaterial durch aufeinanderfolgendes Schmelzen und Erstarren von Schichten mittels Strahlung hergestellt. Die unterschiedlichen Eigenschaften des Hauptkörpers und der Austrittsöffnungen werden dabei durch Variationen der Strahlung generiert. Durch gezielte Steuerung der lokalen Wärmeeinbringung wird bereits beim Bau eine Modifizierung der Werkstoffeigenschaften vorgenommen. Dadurch gelingt es in einem Bereich des Hauptkörpers Zonen und Gefüge unterschiedlicher Werkstoffzustände eines chemisch-homogenen Werkstoffs und damit unterschiedlicher Eigenschaften zu erzeugen.

Der Hauptkörper kann in einer Variante der Erfindung aus unterschiedlichem Aufbaumaterial gebildet werden. Das Aufbaumaterial umfasst vorzugsweise metallische Pulverteilchen, insbesondere niedriglegierte und/oder hochlegierte Stahlpulverteilchen und/oder einen Metall-Polymer-Hybridwerkstoff.

Bei einer besonders bevorzugten Variante der Erfindung ist das rotierende, spanabhebende Werkzeug in Form eines Werkzeugträgers ausgeführt, an dem Wendeschneidplatten fixiert sind. Die Wendeschneidplatten können je nach Abnutzungsgrad gedreht bzw. gewechselt werden.

Erfindungsgemäß wird ein rotierendes Werkzeugs mit röhrenförmigen, strukturbionischen Kühlmittelkanälen zum spanabhebenden Bearbeiten verwendet, wobei die Zuführung von Kühl- sowie Schmiermittel in Fräs-, Dreh- oder Bohrmaschinen optimiert gestaltet ist.

Weitere Merkmale und Vorteile der Erfindung ergeben sich aus der Beschreibung von Ausführungsbeispielen anhand der Zeichnungen und aus den Zeichnungen selbst.

Dabei zeigt:
- Fig. 1: eine perspektivische Darstellung eines exemplarischen Werkzeugs,
- Fig. 2: eine Detaildarstellung der Austrittsöffnungen des Hauptkörpers,
- Fig. 3: eine Draufsicht der Kühlmitteleintrittsöffnung,
- Fig. 4: eine perspektivische Schnittdarstellung des Werkzeugs,
- Fig. 5: eine perspektivische Darstellung des teilgeschnittenen Werkzeugs.

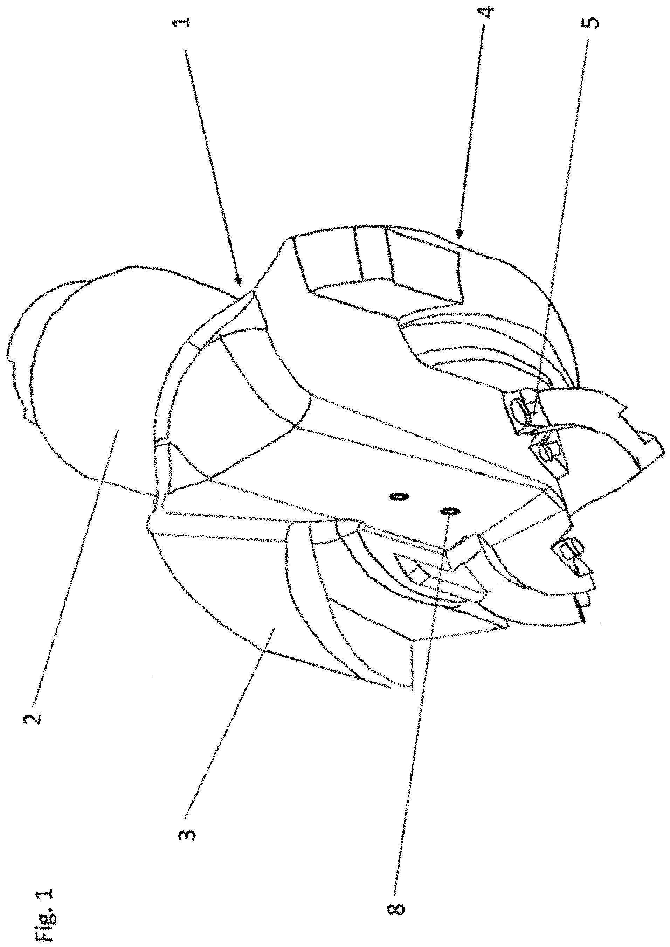

Fig. 1 zeigt ein rotierendes zerspanendes Werkzeug 1 mit einer konventionell gefertigten Aufnahme 2 und einem generativ gefertigten Hauptkörper 3 mit zwei Schneidebenen 4. Jede Schneidebene 4 hat in dieser Ausführungsvariante drei Schneidplatten 5.

Das Werkzeug 1 kann mit der Aufnahme 2 in einer nicht dargestellten Zerspanungsmaschine eingespannt werden.

Das Kühl- und Schmiermittel wird in einem Kühlmittelkanal 6 durch die Aufnahme 2 in den Hauptkörper 3 geleitet. Dieser Kühlmittelkanal 6 verzweigt sich in dieser Ausführungsvariante nach der Eintrittsöffnung 7 in mindestens zwei Kühlmittelkanäle 6. Vom Kühlmittelkanal 6, der in dieser Ausführungsvariante als Hauptkühlmittelkanal ausgebildet ist, führen drei Abzweigkühlmittelkanäle 10 zu den Austrittsöffnungen 8.

Alle Kühlmittelkanäle 6 weisen eine strukturbionische Form auf, die der Form von Adern in einem Lebewesen oder der Form von Flüssigkeitskanälen in Pflanzen ähnelt. Sie verlaufen abgerundet unter Vermeidung starker Abwinklungen in idealer Anpassung an die Form des Hauptkörpers 3 auf kürzest möglichem Weg zu den Austrittsöffnungen 8.

Die Austrittsöffnungen 8 sind immer auf eine Schneidplatte 5 ausgerichtet. Von hier aus wird das Kühlmittel auf die Schneidplatte 5 verdüst. Zwischen Hauptkörper 3 und Schneidplatte 5 befindet sich eine Aussparung, sodass die Späne abgeleitet werden können.

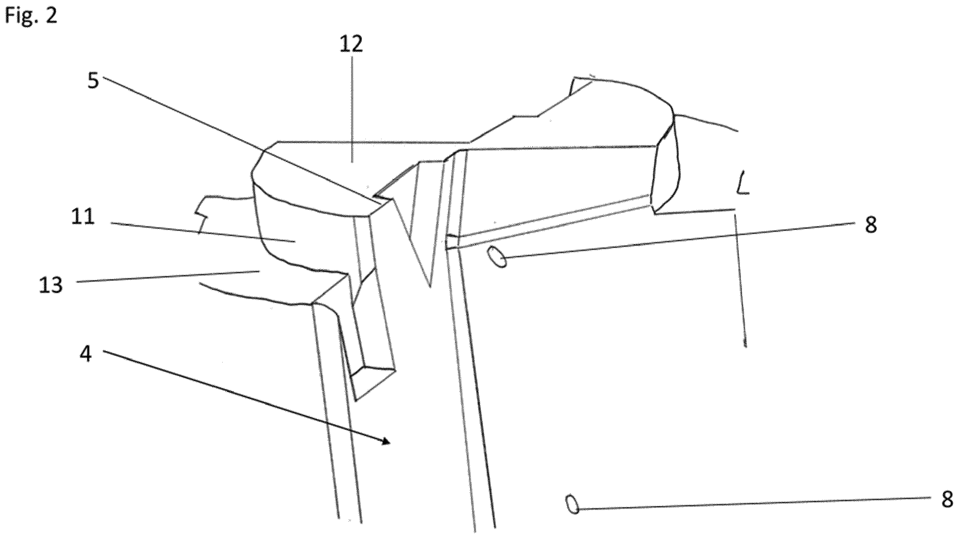

Fig. 2 zeigt eine perspektivische Darstellung der Spitze des Hauptkörpers 3. Man erkennt zwei Aussparungen, an denen die Schneidplatten 5 in der Ausgestaltung von Wendeschneidplatten vorgesehen sind. Die beiden oval ausgeführten Austrittsöffnungen 8 der Abzweigkühlmittelkanäle 10 sind auf die Schneidplatte 5 ausgerichtet und leiten den optimal verdüsten Kühl- und Schmiermittelstrahl direkt auf die Schneidplatte 5, sodass diese komplett erreicht wird.

In der dargestellten Ausführungsvariante existiert eine teilzylindrische Abstufung 11. In jeder Schneidebene 4 gibt es 2 Schneidstufen 12 und 13.

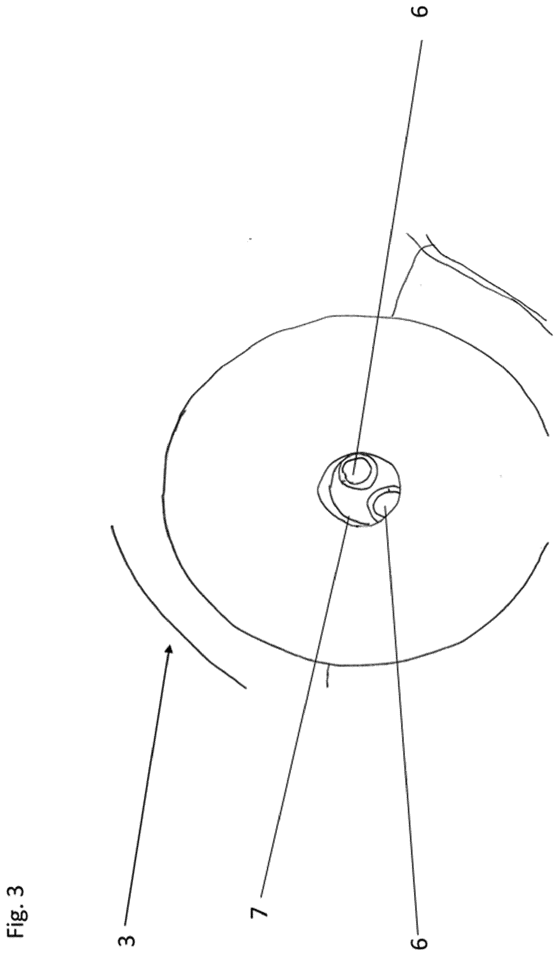

Fig. 3 zeigt einen Querschnitt des Hauptkörpers 3 direkt nach dem Übergang von der nicht dargestellten Aufnahme 2 zum Hauptkörper 3. In dieser Ausführungsvariante verzweigen sich die zwei Kühlmittelkanäle 6, die zu den Schneidebenen 4 führen, direkt nach der Eintrittsöffnung 7.

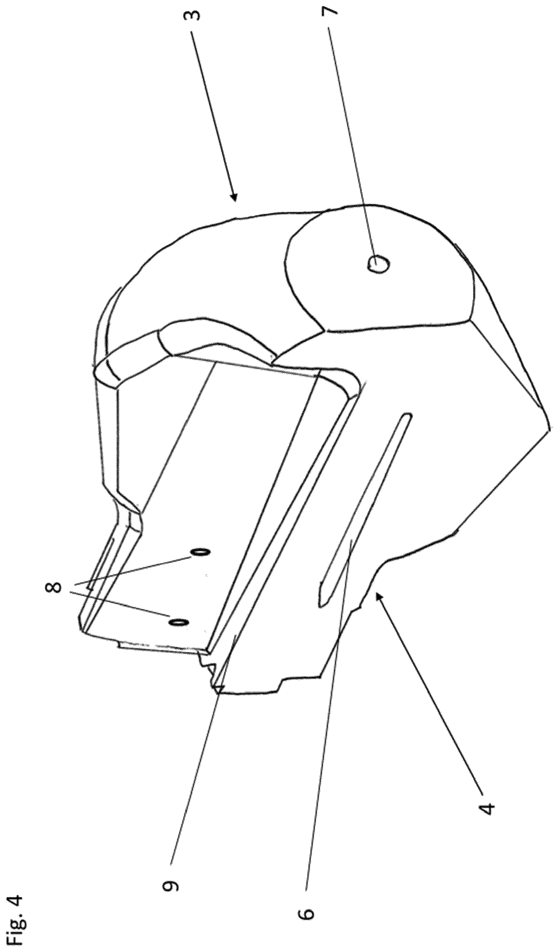

Fig. 4 zeigt einen perspektivischen Querschnitt durch den generativ gefertigten Hauptkörper 3 mit zwei Schneidebenen 4. Die Schneidplatten 5 sind nicht dargestellt. Die Eintrittsöffnung 7 liegt in der Werkzeugmitte 9. Der Kühlmittelkanal 6 liegt außerhalb des Zentrums und ist mit der Eintrittsöffnung 7 verbunden.

Die abgerundeten Kühlmittelkanäle 6 verlaufen als röhrenförmige Struktur mit Windungen parallel zur Oberfläche des Hauptkörpers 3 strukturbionisch auf kürzestem Weg unter Vermeidung starker Abwinklungen von der Eintrittsöffnung 7 zu den Austrittsöffnungen 8. Die Zahl der Verzweigungen richtet sich nach der Anzahl und Lage der Schneidplatten 5, wobei in dieser Ausführungsvariante zwei Austrittsöffnungen 8 zu zwei nicht dargestellten Verzweigungen führen.

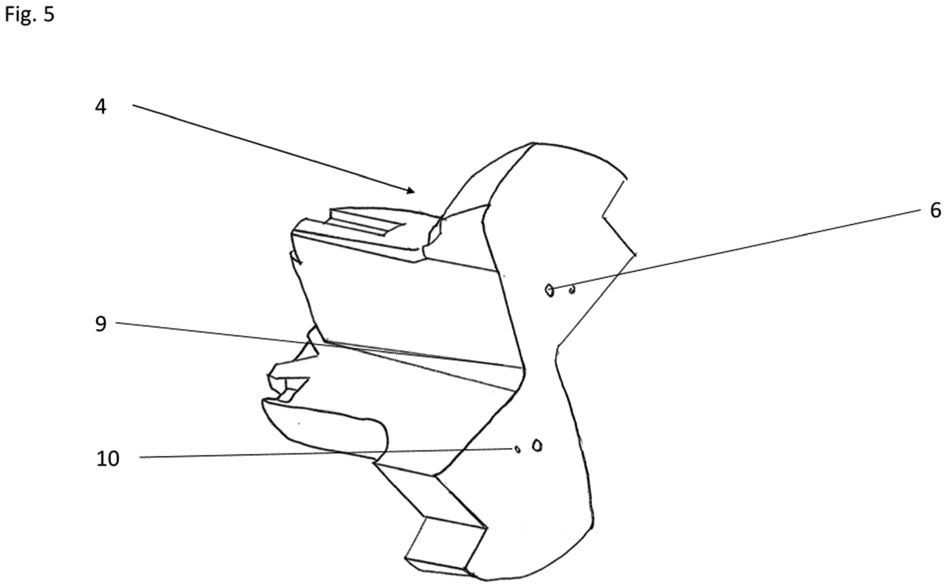

Fig. 5 zeigt eine teilgeschnittene Darstellung des Kopfes des Hauptkörpers 3. Die parallel zur Oberfläche des Hauptkörpers 3 verlaufenden Kühlmittelkanäle 6 liegen außerhalb des Zentrums 9 mittig in den Schneidebenen 4 und erhöhen durch die dezentrale Lage die Stabilität des Hauptkörpers 3. Die beiden Abzweigkühlmittelkanäle 10 verlaufen strukturbionisch in Richtung der Außenhaut des Hauptkörpers 3.

## Patentansprüche

1. Rotierendes, zerspanendes Werkzeug (1) mit einer konventionell gefertigten Aufnahme (2) und einem generativ gefertigten Hauptkörper (3), wobei der Hauptkörper (3) mindestens eine Schneidebene (4) mit mindestens einer Schneidplatte (5) und mindestens einem Kühlmittelkanal (6) aufweist,
**dadurch gekennzeichnet,**
**dass** der Kühlmittelkanal (6) eine generativ gefertigte, röhrenförmige Struktur mit Windungen aufweist.

2. Werkzeug nach Anspruch 1, **dadurch gekennzeichnet, dass** der Kühlmittelkanal (6) eine Eintrittsöffnung (7) und mindestens eine Austrittsöffnung (8) aufweist, wobei der Kühlmittelkanal (6) die Eintrittsöffnung (7) und die Austrittsöffnung (8) direkt verbindet.

3. Werkzeug nach Anspruch 1 oder 2, **dadurch gekennzeichnet, dass** der Kühlmittelkanal (6) einen strukturbionischen Verlauf aufweist.

4. Werkzeug nach einem der Ansprüche 1 bis 3, **dadurch gekennzeichnet, dass** jede Schneidebene (4) mindestens einen Kühlmittelkanal (6) aufweist.

5. Werkzeug nach einem der Ansprüche 1 bis 4, **dadurch gekennzeichnet, dass** jeder Kühlmittelkanal (6) außerhalb der Werkzeugmitte (9) angeordnet ist.

6. Werkzeug nach einem der Ansprüche 1 bis 5, **dadurch gekennzeichnet, dass** jeder Kühlmittelkanal (6) sich in mindestens zwei Abzweigkühlmittelkanäle (10) aufteilt.

7. Werkzeug nach einem der Ansprüche 2 bis 6, **dadurch gekennzeichnet, dass** mindestens eine Austrittsöffnung (8) eines Kühlmittelkanals (6) auf eine Schneidplatte (5) ausgerichtet ist.

8. Werkzeug nach einem der Ansprüche 2 bis 7, **dadurch gekennzeichnet, dass** die Austrittsöffnung (8) eine ovale Form aufweist.

9. Werkzeug nach einem der Ansprüche 2 bis 8, **dadurch gekennzeichnet, dass** die Austrittsöffnung (8) eine unsymmetrische Form aufweist.

10. Werkzeug nach einem der Ansprüche 2 bis 9, **dadurch gekennzeichnet, dass** die Form der Austrittsöffnung (8) und die Form der Schneidplatte (5) eine funktionale Wirkverbindung aufweisen.

11. Werkzeug nach einem der Ansprüche 1 bis 10, **dadurch gekennzeichnet, dass** der Hauptkörper (3) eine Gitterstruktur aufweist.

12. Verfahren zur Herstellung eines rotierenden Werkzeugs (1) nach einem der Ansprüche 1 bis 11, **dadurch gekennzeichnet, dass** die röhrenförmige Struktur des Kühlmittelkanals (6) durch selektives Einwirken einer Strahlung auf ein Aufbaumaterial erzeugt wird.

13. Verwendung eines rotierenden Werkzeugs (1) mit einer konventionell gefertigten Aufnahme (2) und einem generativ gefertigten Hauptkörper (3) zum spanabhebenden Bearbeiten mit idealer Zuführung von Kühl- sowie Schmiermittel in Fräs-, Dreh- oder Bohrmaschinen.
